# EUROPÄISCHE PATENTSCHRIFT

(11) **EP 3 833 525 B1**
(45) Veröffentlichungstag und Bekanntmachung des Hinweises auf die Patenterteilung: **27.09.2023**
(21) Anmeldenummer: 19749697.9
(22) Anmeldetag: 01.08.2019
(51) Int. Cl.: B29C 45/27, B29C 45/76

(54) **HEISSKANALVORRICHTUNG**
HOT RUNNER DEVICE
DISPOSITIF À CANAUX CHAUFFANTS

(30) Priorität: 06.08.2018 DE 102018119011
(43) Veröffentlichungstag der Anmeldung: 16.06.2021
(73) Patentinhaber: EWIKON Heisskanalsysteme GmbH, 35066 Frankenberg (DE)
(72) Erfinder: EIMEKE, Stefan, 35066 Frankenberg (DE); BRAUN, Peter, 35410 Hungen (DE); BROCKHAUS, Sebastian, 35066 Frankenberg (DE)
(74) Vertreter: Specht, Peter
(86) Internationale Anmeldenummer: PCT/EP2019/070754
(87) Internationale Veröffentlichungsnummer: WO 2020/030519

(56) Entgegenhaltungen:
- DE-A1-102015 105 097
- US-A- 5 556 582
- US-A1- 2006 082 009
- US-A1- 2018 001 531

## Beschreibung

Die Erfindung betrifft eine Heißkanalvorrichtung nach dem Oberbegriff des Anspruchs 1.

Eine Heißkanalvorrichtung bildet einen Teil einer Spritzgießmaschine, welche als Komponenten zumindest eine Plastifiziereinheit - die z.B. als Extruder ausgebildet sein kann - sowie ein öffenbares und wieder verschließbares Werkzeug aufweist.

Das Werkzeug wiederum weist ferner eine erste Werkzeughälfte auf und eine zweite Werkzeughälfte. In die eine Werkzeughälfte ist ein beheiztes Heißkanalsystem eingebaut. Das Heißkanalsystem hat die Aufgabe, unter Druck stehende Schmelze bei einer Temperatur oberhalb der Glasübergangs- bzw. Kristallitschmelztemperatur durch ein Verteiler- und Düsensystem in eine oder mehrere Kavitäten des Werkzeugs zu leiten. Es kann als Komponenten eine Düse, einen Verteiler und eine Angießbuchse sowie ggf. weitere Komponenten aufweisen.

Eine Heißkanalvorrichtung im Sinne dieser Schrift weist ein solches Heißkanalsystem zur Durchleitung heißer Schmelze auf und weist darüber hinaus elektrische und/oder elektronische Komponenten auf, die über eine Steuer- und Regeleinrichtung der Heißkanalvorrichtung mit einer zentralen übergeordneten Steuer- und Regeleinrichtung der Spritzgießmaschine verbindbar bzw. im Betrieb auch verbunden sind, welche den gesamten Spritzgießvorgang steuert und/oder regelt. Zu den elektrischen und/oder elektronische Komponenten der Heißkanalvorrichtung gehören einer oder mehrere Sensoren. Zu diesen Komponenten gehören zudem in der Regel mindestens ein Temperaturregelkreis, bestehend aus mind. einer Heizung und mind. einem Temperaturfühler bzw. -sensor.

In dem Heißkanalsystem der Heißkanalvorrichtung werden die Komponenten Düse, Verteiler und Angießbuchse mittels der Heizungen temperiert, wobei Heizzonen ausgebildet werden. Jede einzelne Heizzone kann dabei separat regelbar sein. Dazu werden die Temperaturen je Heizzone mithilfe eines geeigneten Temperaturmessverfahrens (z.B. Thermoelement und/oder Thermofühler) erfasst und dienen dann als Eingangs- bzw. Regelgröße für die Steuer- und/oder Regeleinrichtung der Heißkanalvorrichtung.

In der Regel werden innerhalb der Werkzeughälfte, welche das Heißkanalsystem und diesem zugeordnete Komponenten - also Heißkanaltechnik - beinhaltet (hier auch Heißkanalvorrichtung genannt) - Anschlusskabel der Heizungen sowie der Thermofühler in einem Verdrahtungskasten zu wenigstens einem Stecker zusammengeführt. Mithilfe weiterer Stecker und Kabel wird die Heißkanalvorrichtung mit der Steuer- und Regeleinrichtung der Heißkanalvorrichtung verbunden.

Zum technologischen Hintergrund seien die DE112008001188 und die DE 102013012914 genannt. Die DE112008001188 offenbart eine Spritzgießmaschine, welche eine Steuer- und Regelungsvorrichtung aufweist, die eine Speichervorrichtung umfasst, die mit einem Heißkanalverteiler verbunden ist und Informationen speichert, die dazu dienen, an die Steuer- und/oder Regeleinrichtung der Spritzgießmaschine Prozessdaten und Signale zu übertragen.

In der DE 102013012914 wird eine erste Steuerungseinrichtung beschrieben, die Signale eines Heißkanalsystems empfängt und diese zu einer übergeordneten zweiten Steuerungseinrichtung weiterleitet.

Das Dokument US 5 556 582 A beschreibt ebenfalls eine Heißkanalvorrichtung für eine Spritzgießmaschine.

In der gattungsgemäßen DE 10 2015 105 097 ist ein Sensor an dem Heißkanalsystem angeordnet, aber dieser Sensor wird ausschließlich zur Steuerung/Regelung des Heißkanalsystems verwendet. Bei der zur Steuerung vorgesehenen Einheit handelt es sich um eine übergeordnete Steuer- und Regeleinrichtung im Sinne des Oberbegriffs des Anspruchs 1.

Die Erfindung hat die Aufgabe, den gattungsgemäßen Stand der Technik weiter zu optimieren, um eine verbesserte Überwachung des Betriebs der Maschine zu erreichen.

Die Erfindung löst diese Aufgabe durch die Vorrichtung des Anspruchs 1, die Spritzgießmaschine des Anspruchs 10 und das Verfahren des Anspruchs 11 . Vorteilhafte Ausgestaltungen sind den Unteransprüchen zu entnehmen.

Geschaffen wird eine Heißkanalvorrichtung für eine Spritzgießmaschine, mit einer Steuer- und Regelvorrichtung der Heißkanalvorrichtung, wobei die Heißkanalvorrichtung ferner wenigstens ein Heißkanalsystem aufweist, sowie wenigstens einen Sensor, Aktor und/oder Initiator, der oder die über eine oder mehrere Signal- und/oder Datenstrecken, insbesondere Leitungen, mit einer übergeordneten Steuer- und Regeleinrichtung verbindbar ist/sind, wobei über die eine oder mehrere Signal- und/oder Datenstrecken Prozessdaten und/oder -signale übertragbar sind, dadurch gekennzeichnet, dass die Heißkanalvorrichtung ferner eine Datenerfassungs- und -sicherungseinrichtung aufweist, die zumindest zur Erfassung und Speicherung eines Teils oder sämtlicher während des Betriebs der Spritzgießmaschine am Heißkanalsystem erfassten Prozessdaten und/oder -signale ausgelegt ist und die ein funktional integraler Bestandteil der Heißkanalvorrichtung ist und dass die Datenerfassungs- und -sicherungseinrichtung wenigstens eine mit dem wenigstens einen Sensor, Aktor und/oder Initiator verbundene Messwerterfassungseinrichtung aufweist und wenigstens eine mit der Messwerterfassungseinrichtung verbundene Speicher- und Analyseeinrichtung, wobei die Speicher- und Analyseeinrichtung eine eigene Rechnereinheit aufweist, die eine Mikroprozessoreinheit und einen Datenspeicher aufweist und wobei die Datenerfassungs- und Datensicherungseinrichtung der Heißkanalvorrichtung dazu ausgelegt ist, unabhängig von der Steuer- und Regelvorrichtung der Heißkanalvorrichtung Prozessdaten und/oder -signale direkt aus dem Heißkanalsystem aufzunehmen bzw. zu erfassen, zu speichern und/oder zu analysieren, wobei die Steuer- und Regeleinrichtung der Heißkanalvorrichtung mit einer weiteren, zentralen übergeordneten Steuer- und Regeleinrichtung der Spritzgießmaschine verbindbar ist.

Nach dem Stand der Technik wurden hingegen Prozessdaten über den Betriebszustand der Heißkanalvorrichtung an einer der Heißkanalvorrichtung funktional direkt zugeordneten Einrichtung gespeichert. Zudem gab es häufig keine dauerhafte und feste Zuordnung von Steuer- und Regeleinrichtung zur Heißkanalvorrichtung über den gesamten Heißkanallebenszyklus. Es fehlte an einer separaten Einheit, die direkt und ausschließlich Prozessdaten über das Heißkanalsystem speichert und auswertet. Dieser Nachteil wird durch die Erfindung mit einfachen Mitteln behoben.

Es ist die Auslegung des Anspruchs 1 derart, dass die Steuer- und Regeleinrichtung der Heißkanalvorrichtung ist und dass diese mit einer weiteren, zentralen übergeordneten Steuer- und Regeleinrichtung der Spritzgießmaschine verbindbar ist - die nicht ein Teil der Heißkanalvorrichtung ist - bzw. im Betrieb verbunden ist, mit der bevorzugt bidirektional Daten und/oder Signale austauschbar sind.

Nach einer Variante kann in einfacher Weise vorgesehen sein, dass die eine oder mehreren Datenstrecken als elektrische oder optische Leitungen oder drahtlose Strecken ausgebildet ist/sind und dass die Datenerfassungs- und -sicherungseinrichtung an diese elektrischen und/oder optischen Leitungen oder Strecken angeschlossen oder mit diesen verbunden sind, um der Datenerfassungs- und -sicherungseinrichtung einen Abgriff der nötigen Signale und Informationen zu ermöglichen, die sie dann als Prozessdaten speichert.

Hinsichtlich der genauen konstruktiven bzw. schaltungstechnischen Umsetzung gibt es verschiedene Alternativen. Erfindungsgemäß ist insbesondere vorteilhaft vorgesehen, dass die Datenerfassungs- und -sicherungseinrichtung wenigstens eine mit dem wenigstens einen Sensor, Aktor und/oder Initiator verbundene Messwerterfassungseinrichtung aufweist und wenigstens eine mit der Messwerterfassungseinrichtung verbundene Speicher- und Analyseeinrichtung. Denn derart sind die beiden Aufgaben Messwerterfassung und Parametererfassung einerseits und Speicherung andererseits funktional gut trennbar und realisierbar.

Nach einer zweckmäßigen Ausgestaltung kann vorgesehen sein, dass das Heißkanalsystem als mechanisch konstruktive Komponenten wenigstens eine Düse, wenigstens einen Verteiler und wenigstens eine Angießbuchse aufweist.

Die Speicher- und Analyseeinrichtung kann auch in zwei funktionale Einrichtungen unterteilt werden, d.h. in eine Speichereinrichtung und in eine Analyseeinrichtung. Auch dies fällt unter den Begriff der Speicher- und Analyseeinrichtung.

So ist es denkbar, die erfassten Daten nur direkt oder parallel direkt in der Datencloud zu speichern und ggf. auch dort oder nach einem erneuten Herunterladen zu analysieren. In diesem Fall kann die Datencloud die Aufgaben der Datensicherungseinrichtung bzw. die Rolle der Speichereinrichtung der Speicher- und Analyseeinrichtung übernehmen. Es ist dann nur eine Schnittstelle zur bidirektionalen Übertragung in die /aus der Cloud notwendig. Es kann dann auch vorgesehen sein, dass die Heißkanalvorrichtung 14 einen Code/ein Kennzeichen/eine IP-Adresse aufweist, so dass der die Daten in der Cloud eindeutig zuordenbar sind. Die Analyseeinrichtung kann - so im Falle der Speicherung der Daten in der Datencloud - direkt am Heißkanalsystem vorgesehen sein oder ggf. auch an anderer Stelle. Es kann auch eine Rechnereinheit direkt an der Messwerterfassungseinrichtung vorgesehen sein, die dazu ausgelegt ist, die Daten in der Datencloud ablegen zu können und/oder sie analysieren zu können.

Es ist weiter vorteilhaft, wenn das Speichern in einem nichtflüchtigen Speicher derart erfolgt, dass die Prozessdaten auch nach einem Ausfall von Energie später wieder ausgelesen werden können.

Nach Anspruch 14 ist ferner vorgesehen, dass auf einfache Weise in Zeitintervallen mit der Messwerterfassungseinheit erfasste Prozessdaten in der Speicher- und Analyseeinrichtung gespeichert werden. Optional kann vorteilhaft vorgesehen sein, dass eine Analyse der Prozessdaten in der Speicher- und Analyseeinrichtung erfolgt.

Dabei können in der Speicher- und Analyseeinrichtung als Prozessdaten u.a. Temperaturdaten und/oder Druckdaten und/oder Zyklusdaten und/oder Prozessdaten zu Nadelpositionen, -geschwindigkeiten und -hüben gespeichert werden.

Nachfolgend wird die Erfindung anhand von Ausführungsbeispielen unter Bezug auf die Zeichnung näher erläutert. Die Erfindung ist nicht auf die dargestellten Ausführungsbeispiele beschränkt sondern kann innerhalb des bestehenden Schutzbereiches auch auf andere Weise wortsinngemäß oder äquivalent verwirklicht werden. Es zeigen:
- Fig. 1: eine schematische Darstellung einer mit einer erfindungsgemäßen Heißkanalvorrichtung versehenen Spritzgießmaschine;
- Fig. 2: in a) eine schematische Darstellung einer Messwerterfassungseinheit, in b) eine Speicher- und Analyseeinheit; und
- Fig. 3: ein schematisiertes Blockschaltbild einer Heißkanalvorrichtung.

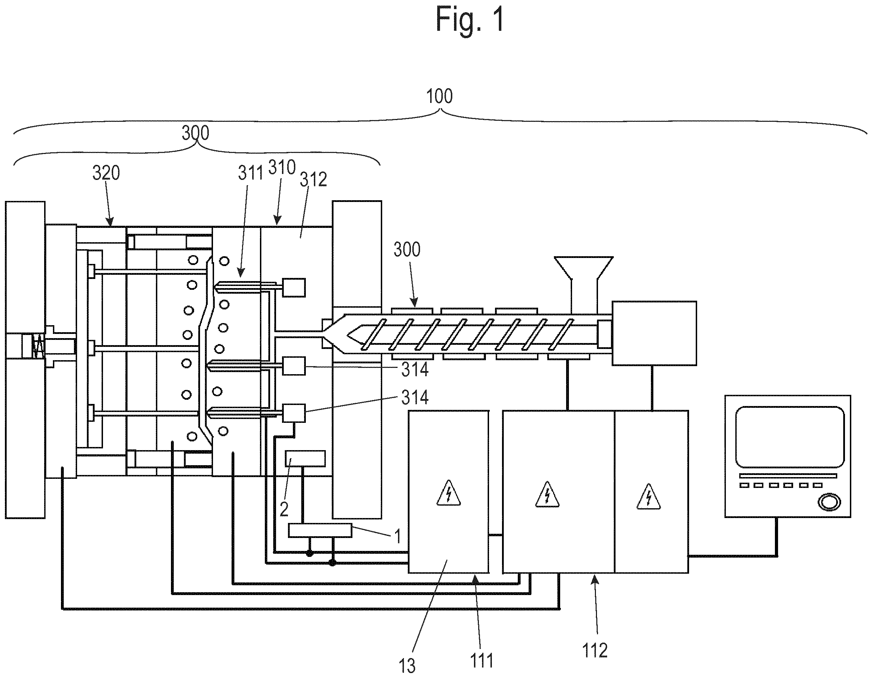

Fig. 1 zeigt eine schematische Darstellung einer Spritzgießmaschine 100, welche als Komponenten eine Plastifiziereinheit 200 zum Plastifizieren von Schmelze - die z.B. als Extruder ausgebildet sein kann, sowie ein öffenbares und verschließbares Werkzeug 300 aufweist.

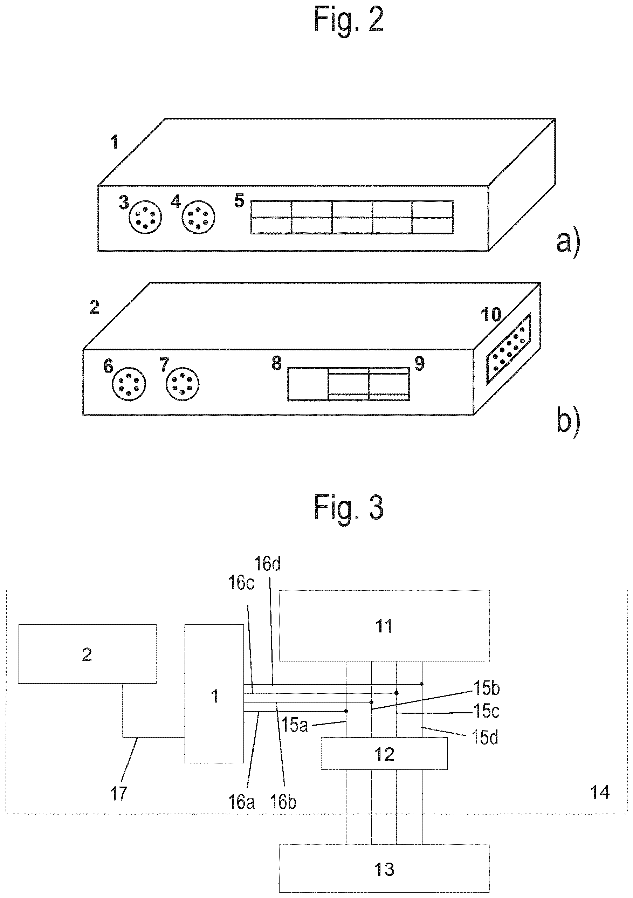

Das Werkzeug 300 weist zwei Werkzeughälften 310 und 320 auf. Die Werkzeughälfte 310 wird hier auch synonym als Heißkanalsystem 11 bezeichnet (siehe Fig. 3) bzw. weist ein solches auf.

Das Heißkanalsystem 11 ist definitionsgemäß ein Teil einer Heißkanalvorrichtung 14. Die Heißkanalvorrichtung weist das Heißkanalsystem 11 auf sowie elektrische und/oder elektronische Komponenten (siehe auch Fig. 2a, b und 3).

Das Heißkanalsystem 11 hat - wie eingangs auch zum Stand der Technik erläutert - die Aufgabe, unter Druck stehende Schmelze bei einer Temperatur oberhalb der Glasübergangs- bzw. Kristallitschmelztemperatur durch ein Verteiler- und Düsensystem (hier Fig. 1) in eine oder mehrere Kavitäten des Werkzeugs zu leiten. Es kann als Komponenten wenigstens eine Düse 311, wenigstens einen Verteiler (integriert in Rahmenplatte 312) und wenigstens eine Angießbuchse (integriert in Rahmenplatte 312) sowie ggf. weitere Maschinenelemente bzw. -komponenten aufweisen.

Die Heißkanalvorrichtung 14 mit dem Heißkanalsystem 11 weist darüber hinaus elektrische und/oder elektronische Komponenten auf, die hier mit einer übergeordneten Steuer- und Regeleinrichtung 13 der Heißkanalvorrichtung 14 verbunden sind, welche alle Heißkanalparameter (z.B. Temperaturen) und/oder den gesamten Spritzgießvorgang steuern und/oder regeln kann. Die Steuer- und Regeleinrichtung ist hier symbolisch durch einen Schaltschrank 111 dargestellt. Daneben gibt es hier einen weiteren Schaltschrank 112, der weitere Komponenten der Maschine wie Spannungsversorgungseinheiten usw. enthalten kann. Der Schaltschrank 112 beinhaltet hier unter anderem auch eine weitere, zentrale Steuer- und Regeleinrichtung der Spritzgussmaschine, wobei die letztgenannte Steuer- und Regeleinrichtung der Spritzgussmaschine Daten mit der Steuer- und Regeleinrichtung 13 der Heißkanalvorrichtung 14 zur Heißkanalsteuerung austauschen kann.

In dem Heißkanalsystem 11 der Heißkanalvorrichtung 14 werden die Komponenten Düsen 311, Verteiler (integriert in Rahmenplatte 312) und Angießbuchse(n) (integriert in Rahmenplatte 312) mittels Heizungen temperiert, wobei Heizzonen ausgebildet werden. Jede einzelne Heizzone wird dabei separat geregelt. Dazu werden die Temperaturen je Heizzone mithilfe eines geeigneten Temperaturmessverfahrens (z.B. Thermoelement und/oder Thermofühler 313) erfasst und dienen dann als Eingangs- bzw. Regelgröße für die Steuer- und/oder Regeleinrichtung 13 der Heißkanalvorrichtung 14.

In dem Heißkanalsystem 11 der Heißkanalvorrichtung 14 können auch Nadelantriebe 314 für die Düsen 311 integriert sein. Jeder einzelne Nadelantrieb 314 wird dabei separat geregelt, wobei der Nadelantrieb eine elektrische Größe an die Steuer- und/oder Regeleinrichtung 13 der Heißkanalvorrichtung 14 übermittelt.

In der Regel werden innerhalb der Werkzeughälfte, welche das Heißkanalsystem und diesem zugeordnete Komponenten - also vorzugsweise die vollständige Heißkanaltechnik beinhaltet (die sogenannte Heiße Seite, hier auch Heißkanalvorrichtung genannt) - Anschlusskabel der Heizungen sowie der Thermofühler in einem Verdrahtungskasten zu wenigstens einem Stecker 12 (siehe auch Fig. 2) zusammengeführt.

Mithilfe dieses Steckers 12 sowie ggf. korrespondierender weiterer Stecker und Kabel wird die Heißkanalvorrichtung 14 mit der übergeordneten Steuer- und Regeleinrichtung 13 der Heißkanalvorrichtung 14 verbunden.

Die Heißkanalvorrichtung 14 - der Erfindung - weist darüber hinaus wenigstens eine ihr direkt zumindest funktional zugehörige Datenerfassungs- und Datensicherungseinrichtung auf. Diese ist zusätzlich zur übergeordneten Steuer- und Regelungsvorrichtung 13 der Heißkanalvorrichtung 14 vorgesehen und funktional von dieser unabhängig. Sie kann daher auch nicht mit dieser verbunden sein. Die Datenerfassungs- und Datensicherungseinrichtung kann der Heißkanalvorrichtung 14 zudem auch direkt örtlich zugeordnet sein.

Diese Datenerfassungs- und Datensicherungseinrichtung weist hier eine Messwerterfassungseinrichtung 1 und eine Speicher- und Analyseeinrichtung 2 auf (Siehe Fig.1 und 2).

Diese beiden Einrichtungen sind hier als zwei baulich getrennte Boxen ausgebildet, was vorteilhaft, aber nicht zwingend ist. Die Messwerterfassungseinrichtung 1 und die Speicher- und Analyseeinrichtung 2 können auch als eine integrierte Box ausgebildet sein.

Die Heißkanalvorrichtung 14 weist ferner verschiedene Leitungen oder Kabel 15a, b, c, d; 16a, b, c, d und wenigstens einen Stecker als externe Schnittstelle 12 auf (siehe Fig. 1, 2a, b und 3).

An die Schnittstelle 12 ist insbesondere die übergeordnete Steuer- und Regelvorrichtung 13 der Heißkanalvorrichtung 14 anschließbar und im Betrieb auch angeschlossen.

In Fig. 3 sind Leitungen 15a, b, c, d, .... dargestellt. Diese Leitungen 15a, b, c, d, ... symbolisieren eine oder mehrere Signal- und/oder Datenstrecke(en), insbesondere eine elektrische oder optische oder kabellose Verbindung zwischen Sensoren, Aktoren und/oder Initiatoren und dgl. des Heißkanalsystems 11 einerseits und hier der Schnittstelle 12 andererseits.

Dies bedeutet, dass die Sensoren, Aktoren und/oder Initiatoren des Heißkanalsystems 11 direkt über die Schnittstelle 12 an die übergeordnete Steuer- und Regelvorrichtung 13 der Heißkanalvorrichtung angeschlossen ist bzw. sind. Darüber hinaus ist vorgesehen, dass auch die Messwerterfassungseinrichtung 1 an die Sensoren, Aktoren und/oder Initiatoren des Heißkanalsystems, insbesondere zur Überwachung wenigstens eines Prozessparameters des Spritzgießprozesses angeschlossen ist. So kann die Messwerterfassungseinrichtung 1 über Abzweigleitungen 16a, 16b, 16c, 16d an der oder den Leitungen 15a, b, c, d oder Kabeln oder auf andere Weise, z.B. drahtlos, mit den Sensoren, Aktoren und/oder Initiatoren verbunden sein.

Die Datenerfassungs- und Datensicherungseinrichtung der Heißkanalvorrichtung ist dazu ausgelegt, unabhängig von der übergeordneten Steuer- und Regelvorrichtung 13 der Heißkanalvorrichtung 14 Prozessdaten direkt aus dem Heißkanalsystem 11 aufnehmen bzw. zu erfassen, zu speichern und/oder zu analysieren. Hierzu weist die Datenerfassungs- und -sicherungseinrichtung zumindest die Komponenten Messwerterfassungseinrichtung 1 und die Speicher- und Analyseeinrichtung 2 auf. Insbesondere die letztgenannte Einrichtung weist eigenständig eine Rechnereinheit auf, die eine Mikroprozessoreinheit und einen Datenspeicher aufweist.

Mit der Messwerterfassungseinrichtung 1 werden im Betrieb Signale und Prozessdaten erfasst, insbesondere Betriebs-Prozesssignale und -daten des Heißkanalsystems 11 und/oder Messwerte aus dem Heißkanalsystem 11, die somit beispielsweise in einfacher Weise an den sowieso vorzusehenden Leitungen oder Kabeln 15a-d (z.B. Thermofühlerkabel und/oder Stromkabel für die Heizungen) innerhalb der heißen Seite abgegriffenen werden können. Es sind keine zusätzlichen Installationen an z.B. Thermofühler notwendig, um die Daten in der Datenerfassungs- und -sicherungseinrichtung zu erfassen. Das Abgreifen der Signale an den vorhandenen Verbindungskabeln reicht zur Erfassung und Überwachung aus.

Diese Prozessdaten und Messwerte werden dann an die Speicher- und Analyseeinrichtung 2 geleitet, und dort gespeichert und können dort optional auch weiter verarbeitet werden. Dazu kann die Speicher- und Analyseeinrichtung 2 mit einem Computerprogramm versehen sein, dass die Datenspeicherung durchführt und ggf. die Prozessdaten auch analysiert, beispielweise, um Fehler im Betrieb der Heißkanalvorrichtung 14 zu erkennen und ggf. anzuzeigen. Die entsprechenden Prozessdaten werden somit in einem funktional direkt der Heißkanalvorrichtung 14 zuzurechnenden Element bzw. Mittel - der Speicher- und Analyseeinrichtung 2 - gespeichert.

Vorzugsweise erfolgt dieses Speichern in einem nichtflüchtigen Speicher derart, dass die Prozessdaten auch nach einem Ausfall von Energie später wieder ausgelesen werden können.

Derart ist es möglich, direkt an der Heißkanalvorrichtung 14 Prozessdaten, welche den Prozessverlauf wiederspiegeln, zu speichern, so dass sie beispielsweise nach einem Störfall unabhängig von einer eventuell zusätzlichen Speicherung an der zentralen Steuer- und Regeleinheit 112, 113 wieder abrufbar sind. Darüber hinaus kann der Prozessverlauf über den kompletten Lebenszyklus erfasst werden, selbst wenn die Heißkanalvorrichtung 14 auf unterschiedlichen Spritzgießmaschinen verwendet und/oder von unterschiedlichen Steuer- und Regelvorrichtung 13 geregelt und/oder gesteuert wird. Durch die lokale Zuordnung der Datenerfassungs- und -sicherungseinrichtung in die Heißkanalvorrichtung 14 ist die von der Spritzgießmaschine und die von der Steuer- und Regeltechnik unabhängige Erfassung aller Prozessdaten möglich.

Die Messwerterfassungseinrichtung 1 kann in einer Variante mit wenigstens einem analogen Eingang 5 - insbesondere einem Thermofühler-Messeingang sowie mit wenigstens einem Analog/Digital-Wandler und wenigstens einem Messverstärker ausgestattet sein. Derart kann wenigstens mit einem entsprechenden Sensor ein Messwert aufgenommen und in wenigstens einen digitalen Wert umgewandelt werden. Der Messwert (z.B. ein Spannungssignal oder ein Stromstärkesignal) wird direkt am Heißkanalsystem 11 an nach dem Stand der Technik bereits vorgesehenen Leitungen für beispielsweise die Thermofühler, die in Düsen, Verteiler und Angießbuchse sitzen, abgegriffen und der Messwerterfassungseinrichtung 1 zugeführt.

Diese Messwerterfassungseinrichtung 1 kann zur Datenübertragung ferner sowohl eine Eingangsschnittstelle 3 als auch eine Ausgangsschnittstelle 4 aufweisen. Es können auch mehrere Messwerterfassungseinrichtungen 1 in Reihe geschaltet werden, um auch eine hohe Anzahl an Prozessdaten erfassen zu können.

Die Messwerterfassungseinrichtung 1 kann über ein Kabel 17 mit der Speicher- und Analyseeinrichtung 2 verbunden sein. In dieser Einrichtung werden die eingehenden Prozessdaten in dem vorgesehenen insbesondere internen Speicher insbesondere in einem regelmäßigen Zeitintervall (z.B. alle 10 sec) dauerhaft gespeichert.

Auf die gespeicherten Prozessdaten kann vorzugsweise über verschiedenste Schnittstellen 8, 9 zugegriffen werden (z.B. USB, Wlan, Ethernet, Bluetooth). Diese können intelligent visualisiert und auf verschiedene Arten ausgewertet werden.

Die Speicher- und Analyseeinrichtung 2 kann insbesondere auch dazu ausgelegt sein, bei Abweichungen zu vorher festgelegten Werten, einen Alarm zu geben. Dieser kann eine Warnungsweitergabe in verschiedener Form (z.B. per Mail oder Systeminformation) an verschiedene Empfänger umfassen.

Eine Anzeige von Maschinenprozessdaten oder Analysen kann an einem Anzeigegerät 113 der Spritzgießmaschine erfolgen. Diese Maschinenprozessdaten werden von der Spritzgussmaschinensteuerung 112 an das Anzeigegerät 113 übermittelt. Bei einem Störfall ist es mit der Speicher- und Analyseeinrichtung 2 möglich, die Prozessdaten des Heißkanalsystems mit den Maschinenprozesssdaten der Spritzgussmaschinensteuerung, die auch Daten der Steuer- und Regeleinrichtung 13 verarbeitet, abzugleichen. Auf diese Weise ist es möglich, festzustellen, ob die Prozessdaten vom Heißkanal von den Maschinenprozessdaten abweichen. Aus diesem Vergleich kann festgestellt werden, ob der Fehler in der Heißkanalvorrichtung 14 liegt oder ob der Fehler in der Steuer- und Regeleinrichtung 13 bzw. in der Spritzgussmaschinensteuerung 112 liegt.

Die Speicher- und Analyseeinrichtung 2 kann weitere Schnittstellen aufweisen, Sinnvoll erschienen beispielsweise eine oder mehrere folgender Schnittstellen:
- ein Spannungsversorgungsanschluss 6,
- ein Interface 7 zur Kopplung mit der Messwerterfassungseinrichtung 1,
- ein Ethernetanschluss 8,
- ein USB-Anschluss 9,
- ein digitaler Eingang 10, um über eine optionale Leitung (hier nicht dargestellt) Signale von der Spritzgießmaschine empfangen zu können.
- WLan und/oder Bluetooth zur kabellosen Verbindung

Die Datenerfassungs- und Datensicherungseinrichtung - insbesondere deren Speicher- und Analyseeinrichtung 2 - ist direkter funktionaler Bestandteil der Heißkanalvorrichtung 14 und unabhängig von weiteren angeschlossenen Einrichtungen, wie einer Steuer- und Regelvorrichtung 13 der Heißkanalvorrichtung 14. Dies bietet den Vorteil, unverfälschte Rückschlüsse auf den Prozess im gesamten Heißkanalsystem 11 ziehen zu können. Eine solche Steuer- und Regelvorrichtung der Spritzgießmaschine ist an dieser zusätzlich vorgesehen.

Es ist auch denkbar, Steuerungssignale der zentralen Steuerungs- und/oder Regelungsvorrichtung 112 der Spritzgießmaschine an das Heißkanalsystem 11 zu erfassen und zu speichern oder die Prozessdaten an der Leitung zwischen dem Stecker 12 und der Steuerungs- und/oder Regelungsvorrichtung 13 abzugreifen.

Realisierbar sind ferner vorteilhaft eine oder mehrere folgender Optionen:
- ein Messen von Drücken (Düse, Verteiler, Angießbuchse, Antriebsdrücke Öl/Luft) mittels geeigneter Sensoren,
- ein Messen einer Zykluszahl, und/oder
- ein Messen von Nadelpositionen, -geschwindigkeiten und -hüben
- ein Messen von Kräften von Kraftmessdosen, die in der Heisskanalvorrichtung eingebaut sind
- ein Positionieren der Messwerterfassungseinrichtung 1 in einem Verdrahtungskasten oder außerhalb am Verdrahtungskasten;
- ein Positionieren der Speicher- und Analyseeinrichtung 2 direkt an der Heißen Seite oder direkt am Verdrahtungskasten;
- ein Versehen der Speicher- und Analyseeinrichtung 2 mit einem Eingang zum Empfang von Prozessdaten einer Spritzgießmaschine;
- ein Ausgeben eines Signals an der Speicher- und Analyseeinrichtung 2 über eine oder mehrere Schnittstellen (z.B. Ethernet, USB, Wlan, Bluetooth);

### Bezugszeichen

- 1: Messwerterfassungseinrichtung
- 2: Speicher- und Analyseeinrichtung
- 3: Eingang
- 4: Ausgang
- 5: Analoger Dateneingang
- 6: Spannungsversorgung
- 7: Interface - Messwerterfassungseinrichtung
- 8: Ethernet-Anschluss
- 9: USB-Anschluss
- 10: Digital I/O
- 11: Heißkanalsystem
- 12: Stecker
- 13: Steuer- und Regeleinrichtung
- 14: Heißkanalvorrichtung
- 15: a, b, c, d Leitungen
- 16: a, b, c, d Leitungen
- 17: Kabel

- 100: Spritzgießmaschine
- 111: Schaltschrank
- 112: Schaltschrank
- 113: Anzeigegerät

- 200: Plastifiziereinheit

- 300: Werkzeug
- 310: heiße Werkzeughälfte
- 311: Düse
- 312: Rahmenplatte
- 313: Thermofühler
- 314: Nadelantrieb

- 320: kalte Werkzeughälfte

## Patentansprüche

1. Heißkanalvorrichtung (14) für eine Spritzgießmaschine, mit einer Steuer- und Regelvorrichtung (13) der Heißkanalvorrichtung (14), wobei die Heißkanalvorrichtung ferner wenigstens ein Heißkanalsystem (11) aufweist, sowie wenigstens einen Sensor, Aktor und/oder Initiator, der oder die über eine oder mehrere Signal- und/oder Datenstrecken, insbesondere Leitungen, mit einer übergeordneten Steuer- und Regeleinrichtung verbindbar ist/sind, wobei über die eine oder mehrere Signal- und/oder Datenstrecken Prozessdaten und/oder -signale übertragbar sind, wobei die Heißkanalvorrichtung ferner eine Datenerfassungs- und -sicherungseinrichtung (1, 2) aufweist, die zumindest zur Erfassung und Speicherung eines Teils oder sämtlicher während des Betriebs der Spritzgießmaschine am Heißkanalsystem (11) erfassten Prozessdaten und/oder -signale ausgelegt ist und die ein funktional integraler Bestandteil der Heißkanalvorrichtung (14) ist, **dadurch gekennzeichnet, dass** die Datenerfassungs- und -sicherungseinrichtung (1, 2) wenigstens eine mit dem wenigstens einen Sensor, Aktor und/oder Initiator verbundene Messwerterfassungseinrichtung (1) aufweist und wenigstens eine mit der Messwerterfassungseinrichtung (1) verbundene Speicher- und Analyseeinrichtung (2), wobei die Speicher- und Analyseeinrichtung (2) eine eigene Rechnereinheit aufweist, die eine Mikroprozessoreinheit und einen Datenspeicher aufweist und wobei die Datenerfassungs- und Datensicherungseinrichtung (1, 2) der Heißkanalvorrichtung dazu ausgelegt ist, unabhängig von der Steuer- und Regelvorrichtung (13) der Heißkanalvorrichtung (14) Prozessdaten und/oder -signale direkt aus dem Heißkanalsystem (11) aufzunehmen bzw. zu erfassen, zu speichern und/oder zu analysieren, wobei die Steuer- und Regeleinrichtung der Heißkanalvorrichtung (14) mit einer weiteren, zentralen übergeordneten Steuer- und Regeleinrichtung der Spritzgießmaschine verbindbar ist.

2. Heißkanalvorrichtung nach Anspruch 1, **dadurch gekennzeichnet, dass** die eine oder mehreren Datenstrecken als elektrische oder optische Leitungen oder drahtlos ausgebildet ist/sind und dass die Datenerfassungs- und -sicherungseinrichtung an diese elektrischen und/oder optischen Leitungen oder Strecken angeschlossen oder mit diesen verbunden sind.

3. Heißkanalvorrichtung nach einem der vorstehenden Ansprüche, **dadurch gekennzeichnet, dass** das Heißkanalsystem (11) als Komponenten wenigstens eine Düse (311), wenigstens einen Verteiler und wenigstens eine Angießbuchse aufweist.

4. Heißkanalvorrichtung nach einem der vorstehenden Ansprüche, **dadurch gekennzeichnet, dass** die Datenerfassungs- und Datensicherungseinrichtung (1, 2) die Prozessdaten und/oder -signale von den Signal- und/oder Datenstrecken, insbesondere Leitungen abgreift, bevor die Prozessdaten und/oder -signale in der Steuer- und Regelvorrichtung (13) der Heißkanalvorrichtung (14) verarbeitet werden.

5. Heißkanalvorrichtung nach einem der vorstehenden Ansprüche, **dadurch gekennzeichnet, dass** das Speichern in einem nichtflüchtigen Speicher derart erfolgt, dass die Prozessdaten auch nach einem Ausfall von Energie später wieder ausgelesen werden können.

6. Heißkanalvorrichtung nach einem der vorstehenden Ansprüche, **dadurch gekennzeichnet, dass** die Messwerterfassungseinrichtung (1) zur Datenübertragung eine Eingangsschnittstelle (3) und eine Ausgangsschnittstelle (4) aufweist.

7. Heißkanalvorrichtung nach einem der vorstehenden Ansprüche, **dadurch gekennzeichnet, dass** die Speicher- und Analyseeinrichtung (2) eine oder mehrere Schnittstellen zum externen Zugriff auf die gespeicherten Prozessdaten aufweist.

8. Heißkanalvorrichtung nach einem der vorstehenden Ansprüche, **dadurch gekennzeichnet, dass** die Speicher- und Analyseeinrichtung (2) dazu ausgelegt ist, bei Abweichungen zu vorher festgelegten Werten, eine Ausgabe, insbesondere einen Alarm, auszulösen.

9. Heißkanalvorrichtung nach einem der vorstehenden Ansprüche, **dadurch gekennzeichnet, dass** die Speicher- und Analyseeinrichtung (2) eine oder mehrere weitere Schnittstellen aufweist, zu denen ein Spannungsversorgungsanschluss (6) und/oder ein Interface (7) zur Kopplung mit der Messwerterfassungseinrichtung (1) gehören.

10. Spritzgießmaschine mit wenigstens einer Heißkanalvorrichtung nach einem der vorstehenden Ansprüche.

11. Verfahren zur Erfassung von Prozessdaten einer Heißkanalvorrichtung nach einem der vorstehenden Ansprüche, **dadurch gekennzeichnet, dass** in Zeitintervallen mit der Messwerterfassungseinheit (1) erfasste Prozessdaten und/oder -signale in der Speicher- und Analyseeinrichtung (2) gespeichert werden.

12. Verfahren nach Anspruch 11, **dadurch gekennzeichnet, dass** eine Analyse der Prozessdaten in der Speicher- und Analyseeinrichtung erfolgt.

13. Verfahren nach Anspruch 11 oder 12, **dadurch gekennzeichnet, dass** das Speichern in einem nichtflüchtigen Datenspeicher derart erfolgt, dass die Prozessdaten auch nach einem Ausfall von Energie später wieder ausgelesen werden können.

14. Verfahren nach einem der vorstehenden Ansprüche, **dadurch gekennzeichnet, dass** in der Speicher- und Analyseeinrichtung (2) die eingehenden Prozessdaten in dem Datenspeicher in vorgegebenen regelmäßigen Zeitintervallen gespeichert werden.

15. Verfahren nach einem der vorstehenden Ansprüche, **dadurch gekennzeichnet, dass** in der Speicher- und Analyseeinrichtung (2) Temperaturdaten und/oder Druckdaten und/oder Zyklusdaten und/oder Prozessdaten zu Nadelpositionen, -geschwindigkeiten und -hüben und/oder Kraftdaten gespeichert werden.

## Claims

1. Hot runner device (14) for an injection molding machine having a control and regulating device (13) of the hot runner device (14), wherein the hot runner device has at least one hot runner system (11), and at least one sensor, actuator and/or initiator which can be connected to a higher-level control and regulating device via one or more signal and/or data paths, in particular lines, wherein process data and/or process signals are transmittable via the one or more signal and/or data lines, wherein the hot runner device further comprises a data acquisition and backup device (1, 2) which is designed at least for acquiring and storing part or all of the process data and/or signals acquired on the hot runner system (11) during operation of the injection molding machine and which is a functionally integral component of the hot runner device (14), **characterized in that** the data acquisition and backup device (1, 2) has at least one measured value acquisition device (1) connected to the at least one sensor, actuator and/or initiator and at least one memory and analysis device (2) connected to the measured value acquisition device (1), wherein the memory and analysis device (2) has its own computer unit which has a microprocessor unit and a data memory and wherein the data acquisition and data backup device (1, 2) of the hot runner device is designed, independently of the control and regulating device (13) of the hot runner device (14), to acquire or record, store and/or analyze process data and/or process signals directly from the hot runner system (11), wherein the control and regulating device of the hot runner device (14) can be connected to a further, central, higher-level control and regulating device of the injection molding machine.

2. Hot runner device according to claim 1, **characterized in that** one or more data lines is/are constructed as electrical or optical lines or wireless, and **in that** the data acquisition and backup device is/are attached or connected to these electrical and/or optical lines or paths.

3. Hot runner device according to one of the preceding claims, **characterized in that** the hot runner system (11) has, as components, at least one nozzle (311), at least one manifold and at least one sprue bush.

4. Hot runner device according to one of the preceding claims, **characterized in that** the data acquisition and data backup device (1, 2) taps the process data and/or process signals from the signal and/or data paths, in particular lines, before the process data and/or process signals are processed in the control and regulating device (13) of the hot runner device (14).

5. Hot runner device according to one of the preceding claims, **characterized in that** the storage in a non-volatile memory takes place in such a way that the process data can be read out again later even after a power failure.

6. Hot runner device according to one of the preceding claims, **characterized in that** the measured value recording device (1) has an input interface (3) and an output interface (4) for data transmission.

7. Hot runner device according to one of the preceding claims, **characterized in that** the memory and analysis device (2) has one or more interfaces for external access to the stored process data.

8. Hot runner device according to one of the preceding claims, **characterized in that** the memory and analysis device (2) is designed to trigger an output, in particular an alarm, in the event of deviations from predetermined values.

9. Hot runner device according to one of the preceding claims, **characterized in that** the memory and analysis device (2) has one or more further interfaces to which a voltage supply connection (6) and/or an interface (7) for coupling to the measured value recording device (1) belong.

10. Injection molding machine having at least one hot runner device according to one of the preceding claims.

11. Method for acquiring process data of a hot runner device according to one of the preceding claims, **characterized in that** process data and/or process signals acquired at time intervals with the measured value acquisition unit (1) are stored in the memory and analysis device (2).

12. Method according to claim 11, **characterized in that** an analysis of the process data takes place in the memory and analysis device.

13. Method according to claim 11 or 12, **characterized in that** the data is stored in a non-volatile data memory in such a way that the process data can be read out again later even after a power failure.

14. Method according to one of the preceding claims, **characterized in that** the incoming process data are stored in the data memory in predetermined regular time intervals in the memory and analysis device (2).

15. Method according to one of the preceding claims, **characterized in that** temperature data and/or pressure data and/or cycle data and/or process data relating to needle positions, speeds and strokes and/or force data are stored in the memory and analysis device (2).

## Revendications

1. Dispositif de canaux chauffants (14) pour une machine de moulage par injection, muni d'un dispositif de commande et de régulation (13) pour le dispositif de canaux chauffants (14), lequel dispositif de canaux chauffants comprend en outre au moins un circuit de canaux chauffants (11) et au moins un capteur, un actionneur et/ou un commutateur, qui peut/peuvent être connecté/s par un ou plusieurs trajets de signal et/ou de données, en particulier des lignes, avec une installation de commande et de régulation de niveau supérieur, des données et/ou signaux de process pouvant être transmis par le ou les plusieurs trajets de signal et/ou de données, le dispositif de canaux chauffants comprenant en outre une installation d'acquisition et de sauvegarde de données (1, 2) qui est dimensionnée au moins pour acquérir et sauvegarder une partie ou l'intégralité des données et/ou signaux de process acquises pendant le fonctionnement de la machine de moulage par injection au niveau du circuit de canaux chauffants (11) et qui fait partie intégrante, du point de vue fonctionnel, du dispositif de canaux chauffants (14), **caractérisé en ce que** l'installation d'acquisition et de sauvegarde de données (1, 2) comporte au moins une installation d'acquisition de valeurs de mesure (1) connectée à au moins un capteur, actionneur et/ou commutateur et au moins une installation d'enregistrement et d'analyse (1) connectée à l'installation d'acquisition de données de mesure (1), l'installation d'enregistrement et d'analyse (2) comportant une unité de calculateur propre qui comprend une unité de microprocesseur et une mémoire de données et l'installation d'acquisition et de sauvegarde de données (1, 2) du dispositif de canaux chauffants étant dimensionnée pour capter ou acquérir des données et/ou signaux de process directement sur le circuit de canaux chauffants (11), les enregistrer et/ou les analyser indépendamment du dispositif de commande et de régulation (13) du dispositif de canaux chauffants (14), l'installation de commande et de régulation du dispositif de canaux chauffants (14) pouvant être connectée à une autre installation de commande et de régulation centrale, de niveau supérieur, de la machine de moulage par injection.

2. Dispositif de canaux chauffants selon la revendication 1, **caractérisé en ce que** les un ou plusieurs trajets de données sont conformés comme des lignes électriques ou optiques ou sans fil et **en ce que** l'installation d'acquisition et de sauvegarde de données est connectée à ces lignes ou trajets électriques et/ou optiques ou reliée à ceux-ci.

3. Dispositif de canaux chauffants selon l'une des revendications précédentes, **caractérisé en ce que** les composants du circuit de canaux chauffants (11) comprennent au moins une buse (311), au moins un distributeur et au moins une buse de pot d'alimentation.

4. Dispositif de canaux chauffants selon l'une des revendications précédentes, **caractérisé en ce que** l'installation d'acquisition et de sauvegarde de données (1, 2) capte les données et/ou signaux de process sur les trajets de signal et/ou de données, en particulier les lignes, avant que les données et/ou signaux de process soient traités dans le dispositif de commande et de régulation (13) du dispositif de canaux chauffants (14).

5. Dispositif de canaux chauffants selon l'une des revendications précédentes, **caractérisé en ce que** l'enregistrement dans une mémoire non volatile a lieu de telle manière que les données de process puissent être relues même après une coupure d'énergie.

6. Dispositif de canaux chauffants selon l'une des revendications précédentes, **caractérisé en ce que** l'installation d'acquisition de données de mesure (1) comporte une interface d'entrée (3) et une interface de sortie (4) pour la transmission de données.

7. Dispositif de canaux chauffants selon l'une des revendications précédentes, **caractérisé en ce que** l'installation d'enregistrement et d'analyse (2) comporte une ou plusieurs interfaces pour l'accès externe aux données de process enregistrées.

8. Dispositif de canaux chauffants selon l'une des revendications précédentes, **caractérisé en ce que** l'installation d'enregistrement et d'analyse (2) est conçue pour déclencher une sortie, en particulier une alarme, en cas de déviation par rapport à des valeurs prédéterminées.

9. Dispositif de canaux chauffants selon l'une des revendications précédentes, **caractérisé en ce que** l'installation d'enregistrement et d'analyse (2) présente une ou plusieurs autres interfaces, dont font partie un raccord d'alimentation électrique (6) et/ou une interface (7) pour le couplage à l'installation d'acquisition de données de mesure (1).

10. Machine de moulage par injection munie d'au moins un dispositif de canaux chauffants selon l'une des revendications précédentes.

11. Procédé pour l'acquisition de données de process d'un dispositif de canaux chauffants selon l'une des revendications précédentes, **caractérisé en ce que** des données et/ou signaux de process acquis à des intervalles de temps avec l'unité d'acquisition de valeurs de mesure (1) sont enregistrées dans l'installation d'enregistrement et d'analyse (2).

12. Procédé selon la revendication 11, **caractérisé en ce que** les données de process sont analysées dans l'installation d'enregistrement et d'analyse.

13. Procédé selon la revendication 11 ou 12, **caractérisé en ce que** l'enregistrement dans une mémoire non volatile a lieu de telle manière que les données de process puissent être relues plus tard, même après une coupure d'énergie.

14. Procédé selon l'une des revendications précédentes, **caractérisé en ce que** les données de process entrant dans l'installation d'enregistrement et d'analyse (2) sont enregistrées dans la mémoire de données à des intervalles de temps réguliers prédéterminés.

15. Procédé selon l'une des revendications précédentes, **caractérisé en ce que** l'installation d'enregistrement et d'analyse (2) enregistre des données de température et/ou des données de pression et/ou des données de cycle et/ou des données de process concernant les positions, les vitesses et les courses des aiguilles et/ou des données de force.
